# EUROPEAN PATENT APPLICATION

(11) **EP 3 136 142 A1**
(43) Date of publication of application: **01.03.2017**
(21) Application number: 16157586.5
(22) Date of filing: 05.03.2009
(51) Int. Cl.: G02B 5/09, G02B 5/136, F41H 3/00, F41H 13/00

(54) **IDENTIFICATION DEVICE**

(30) Priority: 12.03.2008 GB 0804547
(62) Divisional of application: 09719397.3
(71) Applicant: QinetiQ Limited, Farnborough Hampshire GU14 0LX (GB)
(72) Inventor: Shohet, Adam, Farnborough, Hampshire GU140LX (GB); O'Keefe, Eoin, Farnborough, Hampshire GU140LX (GB); Swan, Martin, Farnborough, Hampshire GU140LX (GB)
(74) Representative: Charlton, Steven

(57) **Abstract**

A sheet of thermally reflective material (1) has a surface texture comprising a plurality of reflecting elements (2), wherein each element has a first face (4) which is substantially reflective at thermal infrared wavelengths and wherein the respective first facets (4) form an angle θ with the plane of the sheet (A-B)( 0° < θ < 90°). Preferably, the first facets (4) are aligned such that, in use, thermal radiation is reflected from a common direction. By orienting the sheet of thermally reflective material to reflect cold regions of the sky, a marking material exhibiting a cold spot in a thermal imager can be provided.

## Description

The present invention relates to a reflective material and, in particular, to a material which is reflective in the thermal infrared and/or near infrared wavebands. The invention also relates to identification devices incorporating said material and methods for using said materials and devices.

The invention is particularly, but not exclusively, applicable to vehicles, fixed structures and/or personnel to aid their identification, and is more particularly applicable to the ground-to-ground identification of said objects. The invention enables unambiguous identification using near infrared and/or thermal infrared imaging techniques, either in combination or in isolation. The invention is particularly suitable for use in scenarios where identification markings enable the viewer to differentiate between marked and unmarked vehicles, fixed structures and/or personnel through an electro-optic imaging system.

Infrared imaging is a widely used technology and the emergency services, enforcement agencies and armed services are equipped with both night vision systems (such as night vision goggles) and thermal infrared imaging systems. Night vision systems based on image intensifier tubes are typically used in low ambient light conditions and function by amplifying the small amounts of radiation naturally available and/or supplemented by artificial light sources and reflected from surfaces. This includes near infrared radiation, by which is generally meant radiation between the visible and thermal infrared parts of the electromagnetic spectrum having a wavelength in the range 0.78 micron to 2 micron.

Thermal imaging, on the other hand, can be used under all lighting conditions, including when there is no ambient lighting, in extremely low light conditions or in full daylight. This technique makes use of the fact that all bodies above 0K emit radiation and that in the temperature range usually encountered in inhabited regions of the earth (-20°C to +40°C) this radiation occurs in what is called the thermal infrared. In the thermal infrared, conventional visible markings are not obvious. At the wavelength that typical thermal infrared imagers operate (either 3-5 micron or 8-12 micron) dark and light visually coloured materials tend to have the same high thermal infrared emissivity. Thus, they appear to be the same apparent temperature and hence, "infrared colour", as do conventional retro-reflective materials used in, for example, vehicle marking liveries. Similarly near infrared retro-reflective materials for use with image intensifier based imaging systems have high thermal infrared emissivity and are also not obvious when viewed using a thermal infrared imaging system.

Accordingly, identification markings designed for use at visible wavelengths and near infrared wavelengths have little or no contrast with the background at thermal infrared wavelengths and are not generally discernible when viewed through thermal imagers.

It is known to provide thermal infrared markings by providing areas of high thermal infrared emittance contrast on a surface. These areas are created by minimising both the self-emittance of thermal infrared radiation and the reflected thermal infrared energy in one area, so as to create an 'apparently cold' surface, while adjacent areas having high self emittance are 'apparently hot'. Some parts of the sky are cold and emit little thermal infrared radiation and this may be used to minimise the reflected energy component; this phenomenon is typically referred to as 'cold sky reflection'.

WO 2006/016094 describes an identification device for marking an article comprising a plurality of layers including a first layer arranged to be substantially absorbing at at least one visible wavelength and a second layer arranged to be substantially reflective at thermal infrared wavelengths. The second layer is able to increase the thermal infrared contrast of identification markings, but only if the device is inclined to the horizontal at an angle in the range 0° to 40° (in other words, the device needs to be mounted on a horizontal or near-horizontal surface). Accordingly, the device of WO 2006/016094 is suitable for most air-to-ground identification scenarios, but has limited application to ground-to-ground identification by thermal infrared imaging. The inventors have also found that the device of WO 2006/016094 operates poorly at shallow observation angles.

One known means of providing ground-to-ground identification by thermal infrared imagery is to coat a vertically-inclined surface with a highly reflective, low thermal infrared emissivity material (such as, for example, a paint or tape) so as to reflect the low thermal infrared radiation emittance from the cold regions of the sky, through a suitable angle, to a ground-based observer. Typically, prior art identification systems of this type either make use of pre-existing inclined surfaces on vehicles and/or structures, or comprise specially constructed frames having one or more inclined slats or surfaces on which the thermal infrared reflective, low thermal infrared emissivity material is placed. Both types of system have a number of operational disadvantages; the first mode of use relies on the object to be marked having inclined surfaces in a suitable position (indeed, there may be no suitable location) whereas systems of the latter type tend to be bulky, cumbersome, susceptible to physical damage and their size can make it difficult to find suitable space on many vehicles. Moreover, prior art systems tend to be particularly unsuitable for use on personnel and portable equipment. WO 2005/110011 is an example of a prior art marking system which makes use of an inclined thermally reflecting surface.

According to a first aspect of the present invention, there is provided a sheet of thermally reflective material having a surface texture comprising a plurality of reflecting elements, wherein each element has a first facet which is substantially reflective at thermal infrared wavelengths and wherein the respective first facets form an angle θ with the plane of the sheet (0° < θ < 90°).

Preferably, the first facets are aligned such that, in use, thermal radiation is reflected from a common direction. In other words, the facets are aligned such that, when the material is applied to an object or surface, each facet reflects substantially the same thermal image or scene and the material acts as a thermal mirror. However, because the first facets are inclined with respect to the plane of the sheet by an angle θ (0° < θ < 90°) the reflected scene is not the scene that would be reflected by a plain mirror, that is, the reflected scene is not from an angle equal to the observation angle with respect to the Normal to the surface of the material. Instead, the reflected scene is from the said common direction and, in use, the material acts as a directional reflector.

To provide the desired directional reflection properties, the respective first facets are generally aligned in the X, Y plane (that is, in the plane of the sheet). The inclination angle θ then governs the extent to which the reflecting first facets lie out of plane (in the Z axis) and accordingly, determines the directionality of each reflecting facet.

Usually, the respective first facets form the same angle θ with the plane of the sheet, thereby providing a thermally reflective material suitable for mounting on, or being applied to, a planar surface. In that situation, the first facets lie in substantially the same plane with respect to one other and, in use, the facets remain aligned and thermal infrared radiation is reflected from a common direction. Preferably, the value of θ is selected so as to provide the desired directional reflection angle (in this case 2θ) for a particular apptication.

In other situations, however, a range of angles θ may be selected so as to provide a material capable of being applied to a curved surface. In that case, the angle θ for each element is chosen such that, when positioned on the intended curved surface, the thermally reflecting first facets come into alignment so as to provide the desired directional reflection angle (that is, they lie in the same plane during use). Once again, thermal radiation is reflected from a common direction during use. Preferably, the range of angles θ is selected so as to provide a graded texture suitable for mounting on a smoothly curved surface such as, for example, the surface of a helmet.

The invention is beneficial in that it provides a sheet of thermally reflective material which, in use, has inherent directional reflection, in other words, when viewed Normal or perpendicular to the plane of the sheet, the sheet reflects a thermal infrared scene from a different direction or spatial region to that Normal to the plane of the reflecting material. Similarly, when the sheet is viewed from an angle +A away from the Normal to the plane of the sheet the reflected scene is not from -A but from -(A+2θ) from the Normal to the sheet surface. The directional properties of the sheet of material arise from the surface texture, which texture comprises a plurality of first reflecting facets acting as discrete thermal infrared reflectors inclined with respect to the plane of the sheet and aligned, during use, in a common reflection plane. A thermal infrared imager positioned in front of the material is able to observe thermal infrared radiation originating from a different direction or spatial region, the precise direction or region being dependant on the angle θ. In effect, the image from the region being observed is rotated through an angle 2θ to the imaging device.

The material of the invention can take a number of different forms, such as, for example, a rigid or semi-rigid plate, a flexible sheet, a thin film, an appliqué or a tape. In all cases, the invention provides a sheet of material having a surface texture which is inherently capable of reflecting thermal infrared radiation through a desired angle, without needing to orient the material itself at said angle. Accordingly, the material has a number of important advantages, including having a low cross-sectional profile, being easy to use and configure for a given application and being highly adaptable.

By selecting a suitable value for first facet angle θ, or range of facet angles for a graded texture suitable for a curved surface, the material of the invention is able to minimise reflected radiation by directing the reflected thermal infrared radiation component to be from the 'cold sky' when mounted onto a vertical or near-vertical surface.

By thermal infrared wavelengths is meant infrared wavelengths from about 2 micron to about 20 micron and the terms 'thermal radiation' and 'thermally reflecting' are construed accordingly. Ideally, the first facets are capable of reflecting thermal radiation in the specific imaging bands 3-5 micron and/or 8-12 micron and advantageously, the first facets are also substantially reflective to wavelengths in the near infrared, that is, wavelengths between about 0.78 micron and about 2 micron. By providing a first facet which is thermally reflective across the near infrared and thermal infrared, a sheet of thermally reflecting material can be produced which is capable of being viewed in a range of thermal imager and image intensifier devices.

The sheet of reflective material may take any form which is suitable for providing the required surface texture, such as, for example, a substantially planar substrate having hollow and/or solid reflecting elements positioned thereon, or a corrugated substrate. Depending on the precise form of the sheet material, the side of the sheet opposing the textured (thermally reflecting) surface may either itself be textured (as would be the case, for example, for a corrugated sheet) or may be substantially planar. The opposing surface need not comprise a thermally reflective material.

It is desirable that the plurality of thermally reflecting elements form a micro-structure such that the height of the reflecting elements perpendicular to the plane of the sheet is in the order of millimetres and/or microns. Preferably, the reflecting elements have a perpendicular height of 5 mm or less, more preferably 2 mm or less and still more preferably 1 mm or less. In some cases, a surface texture having a depth as shallow as 0.01 mm to 0.5 mm, preferably 0.05 to 0.2 mm is desirable, so that a material is formed having a surface texture which is as smooth as possible whilst still having the desired optical properties.

A benefit of the invention is that the directional reflection properties can be provided in a thin layer texture, preferably a micro-structured texture. However, the textured surface may itself be formed on a substrate such that the overall thickness of the sheet of thermally reflective material is larger than the depth of the surface texture. In general, the substrate depth can be independently selected so as to provide the necessary strength, rigidity, flexibility etc for a particular application, whilst still providing the required optical properties in a thin surface layer. A particularly preferred material according to the invention has been produced having an overall sheet thickness of about 0.5 mm and a surface texture depth of <0.2 mm.

The reflecting elements may take any shape, although it is preferred that, for optimum efficiency, a shape is selected which maximises the first facet area relative to the area of any further facets and/or other surfaces of said element.

Individual reflecting elements, and the first facets thereof, need not take the same shape, but are preferably the same shape for ease of manufacture. Similarly, the reflecting elements can be positioned in any manner on the substrate, either randomly or in an ordered pattern, provided that respective first facets are suitably aligned. However, ease of manufacturing again favours ordered positioning of the reflecting elements. Moreover, it has been found that certain ordered configurations optimise the thermal reflection efficiency of the material.

Accordingly, it is preferred that the reflecting elements take the same shape and are positioned in a repeating pattern on the substrate, yielding a material having a uniform surface texture. More preferably, the shape and positioning of the reflecting elements, and first facets thereof, are selected so as to maximise the thermal reflection efficiency of the material in use.

In a particularly preferred embodiment of the invention, the reflecting elements take the form of ridges across the sheet of material, ideally ridges having a triangular cross section (a so-called 'sawtooth' texture). Preferably, the cross-section of the reflecting elements takes the form of a right-angle, or near right-angle, triangle, which triangle has its minor inner angle corresponding to the first facet angle θ, and wherein the right-angle, or near right-angle, corresponds to the apex of the reflecting element. In order to maximise reflection efficiency, the ridges preferably abut one another, thereby minimising any area of exposed substrate.

In another preferred embodiment, the plurality of reflecting elements are arranged such that only certain regions of the sheet of thermally reflective material reflect thermal infrared radiation, preferably thermal radiation from a common direction. In this way, a configuration or pattern can be built into the surface texture, which pattern only becomes apparent in a thermal image.

Depending on the required application, the sheet of thermally reflective material may be formed from a metal, a metal alloy, a composite material, a ceramic, a polymer or any combination thereof. For example, the material might comprise a metal, metal alloy, composite material, a ceramic and/or a thermoset polymer if a rigid or semi-rigid plate is required. Alternatively, the material might comprise a flexible or semi-flexible polymer if a flexible sheet, tape or appliqué is required. Clearly, the choice of materials is not intended to be limiting and many other suitable materials or combination of materials will occur to the skilled person. Preferred metals are stainless steel and aluminium. Examples of suitable polymers are epoxy resin and polyurethanes, including thermoplastic polyurethanes (TPUs), acrylonitrile butadiene styrene (ABS), thermoplastic elastomers (TPEs) and nylons.

The first facets preferably comprise a material with a low emissivity in the thermal infrared and, advantageously, the first facets are specular reflectors in the thermal infrared waveband. Typically, the first facets comprise a material having a thermal emissivity less than or equal to 0.5, more preferably less than or equal to 0.3, even more preferably less than or equal to 0.1 and most preferably less than or equal to 0.05. In general, the lower the emissivity in the thermal infrared, the better the performance of the first facet (and accordingly, the material of the invention) when viewed through a thermal imager.

Metals typically have an emissivity in the thermal infrared below 0.1, so advantageously the first facet comprises a metal or metal alloy. In one preferred embodiment, the first facets have a thin-film metal layer deposited thereon, so as to render said facets substantially reflective at thermal infrared wavelengths. Preferably, the thermally reflective layer comprises a metal selected from gold, platinum, palladium silver, copper, titanium, chromium, nickel and aluminium, or any combination thereof. Aluminium, nickel and gold are particularly preferred. Alternatively, a thermal infrared reflective paint can be coated onto the first facets. Clearly, an additional thin-film metal layer or thermally reflective coating may not be necessary if the sheet of thermally formed from a metal or metal alloy having inherently high thermal infrared reflectivity. However, the reflection properties of metallic first facets can, in some cases, be improved by providing an optional thin-film metallic layer having high quality thermal infrared reflection characteristics, preferably a layer of a different metal.

The reflecting elements may comprise one or more further facets. Preferably, only the first facet is thermal infrared reflecting so as to minimise or substantially avoid reflections from thermal infrared sources other than those from a required common direction. Optionally, the one or more further facets, and/or any other exposed surface of the sheet of thermally reflective material, are coated in, or otherwise comprise, a material having a low thermal infrared reflectivity so as to prevent stray thermal infrared reflections that can reduce the effectiveness of the device.

It is desirable that losses through diffuse reflection from the first facet and diffraction from defects and edges are reduced. This can be achieved by ensuring that the first facets are specular reflectors in the thermal infrared, with surface roughness below about 0.5 microns, and by ensuring that the first facets are free from pits and other surface defects.

The sheet material of the invention can be made in a number of different ways, such as, for example, by injection moulding, compression moulding, open casting, electroforming, machining, extrusion, embossing etc. The optional thermally reflecting layer can be deposited by a number of methods well-known to those skilled in the art such as, for example, vacuum deposition techniques including evaporation and sputtering, and physical vapour deposition, electroplating, chemical deposition, foiling, printing, painting etc.

The sheet of thermally reflecting material can be produced in any size and/or shape, or cut to size and/or shape.

Optionally, the sheet material can be coloured, and colour can be imparted in a number of different ways. One way is to form the thermally reflective sheet material from a material which is itself coloured, such as, for example, a coloured metal or metal alloy. Alternatively, a coloured, high thermal reflectivity paint may be applied to all or part of the textured surface, or a coloured, thermally transparent layer can be applied to the textured surface on top of any thermally reflective layer or material. Clearly, care must be taken that the thermal reflection properties of an underlying thermally reflective layer are not adversely affected. Preferably, the coloured, thermal infrared transparent layer contains a matting agent so as to prevent reflection in the visible band.

The material of the invention can comprise an optional self-adhesive layer and protective backing layer.

By selecting a suitable value, or range of values, for θ, and orienting the material such that, in use, the thermal infrared reflective first facets are directed towards the cold regions of the sky, the sheet material of the invention can be mounted on any vertical or near-vertical surface as a marking material exhibiting a 'cold spot' in a ground-based thermal imager. The material can either be mounted directly onto the surface using adhesive, fasteners or other fixing means, or fixed to a permanent, semi-permanent or removable mounting which is in turn fixed to a vehicle, structure or other object. In one preferred embodiment, the material takes the form of a flexible marking material which can be positioned on personnel, suitably on substantially vertical parts of the head, limbs and/or torso. In another preferred embodiment, the sheet material takes the form of a rigid or semi-rigid plate suitable for use as an identification marker for structures and vehicles. In yet another preferred embodiment, the sheet material takes the form of a flexible sheet, tape or appliqué, preferably an adhesive sheet, tape or appliqué, suitable for marking vehicles, structures, personnel etc.

The inventors have found that the latter embodiment has unexpected advantages for marking military vehicles. Prior art markers are traditionally designed to be rugged and durable, leading to bulky and cumbersome systems. Such systems are susceptible to physical damage - leading to a degradation in optical performance - and yet are difficult and time consuming to replace. An alternative way of marking a vehicle is to apply a flexible sheet, tape or appliqué according to the invention directly to a vertical or near-vertical surface of said vehicle. If damage to the marker occurs in use, the sheet, tape or appliqué can easily be removed and replaced by another marker. Moreover, replacement markers can be folded or rolled for ease of storage. In one example, an appliqué suitable for marking a vehicle has an overall thickness of 250 micron and comprises a bonding layer (preferably a pressure sensitive adhesive), a polyester layer, an acrylic layer, a deposited aluminium layer and a coloured, infrared transparent coating.

Alternatively, an object can be manufactured in whole or in part from the sheet material of the invention so as to provide one or more marked areas on the vertical surfaces of said object.

Conversely, it is possible to mount the material of the invention on a horizontal or near-horizontal surface such that 'cold sky' is reflected from the plurality of first facets when the surface is viewed from a shallow angle (that is, at an angle close to horizontal). The inventors have found that prior art thermally reflective materials mounted on horizontal or near-horizontal surfaces for air-to-ground observation by means of 'cold sky' reflection tend to reflect warm, close to the horizon sky when observed at shallower angles, thereby reducing the effectiveness of contrast markings. By using the material of the invention instead of a prior art reflective material in such scenarios, it is possible to improve the contrast effects. Optionally, a combination of known materials and material according to the invention can be used to provide good performance over a range of viewing angles.

Accordingly, a second aspect of the invention provides an identification system comprising one or more sheets of thermally reflective material according to the first aspect. Preferably, the first facets are aligned such that, in use, thermal radiation is reflected from a common direction.

Preferably, the one or more sheets each have the same facet angle θ, or range of facets angles, so as to present the same reflected image to a thermal imager in use. However, for some applications it may be desirable to provide one or more sheets having a different reflection angle θ, or range of reflection angles, so as to provide one or more areas having different apparent temperatures.

As discussed above in relation to the first aspect, the thermally reflective material is inherently capable of reflecting incident thermal radiation through an angle 2θ and accordingly, does not need to be inclined in order to achieve a desired reflection angle. Preferably, in use, the identification system is positioned such that the thermally reflective material lies in a vertical or near-vertical plane, ideally at or within 25° from the vertical, more preferably at or within 10° from the vertical and even more preferably within 5° from the vertical. So-positioned, the angle θ of the first facets is chosen to reflect thermal radiation from the cold regions of the sky to a ground-based observer or thermal imager at a similar altitude to the identification device.

Vertical surfaces are common on buildings, vehicles, semi-permanent structures, personnel etc and, advantageously, the identification device is attached to a vertical or near-vertical surface of an object so as to provide ground-to-ground identification. Alternatively, the device can be attached to a horizontal surface such as the roof of a building or vehicle so as to provide air-to-ground identification at shallow grazing angles.

By way of background, infrared thermal imagers record the spatial distribution of the combined self emittance and reflected emittance of objects in an observed scene. The intensity of the self-emitted radiance is dependent on the temperature of the surface, T, and its emissivity 'ε'; this follows from the simple Stefan-Boltzmann law, which gives the radiant energy (E) of a body as E= εσT⁴ (where ε is emissivity, σ is Boltzmann's constant and T is absolute temperature). The reflected radiance is dependent on the emissivity of the surface and the apparent temperature of the scene that is reflected. Kirchoff's law teaches that, for an opaque body, ρ=1-ε (where ρ is reflectance). The solid angular fraction of the scene that is reflected is a function of how Lambertian (or diffuse) the surfaces of the object are and their viewing angle with relation to the thermal imager. If the surface has a low emissivity and is entirety diffuse then the reflected component will be an average of the hemisphere Normal to the surface. If the surface is highly specular, on the other hand, then the fraction of the scene reflected will be dependant on the optics of the imager and the angles and range between the imager and the object. In the vast majority of thermal scenes the sky Normal to the mean surface of the earth is the coldest region and when viewed as a 'white is hot' image is often significantly darker (colder) than the rest of the image.

Using a calibrated thermal imager (imaging radiometer) it is possible to record the apparent temperature of the sky from the horizon to directly overhead and it can be shown that, typically, temperature decreases in an essentially monotonic way over an arc up to an elevation of 90°. The exact temperature profile is dependent on local climatic conditions, atmospheric moisture content, position of the sun etc, but, in general, the lowest temperatures are directly overhead. In almost all cases, the sky directly overhead is significantly cooler than any object in the scene and presents a thermal image which is significantly darker than the surrounding environment.

Thus, a thermally reflective surface angled such that, when viewed from the same altitude, it reflects the sky directly overhead will appear unnaturally cold. It is this effect that is used in the present invention. Preferably, the reflective surface is a specular surface.

The identification system of the invention uses the principle of 'cold sky reflection' in a similar way to prior art identification devices, but, instead of utilising one or more inclined surfaces coated with a low emissivity, high reflectivity tape or paint, the system comprises a sheet of material having a surface texture comprising a plurality of inclined thermally reflective facets, preferably a micro-structured surface texture. This confers a number of important advantages. Because the reflection of thermal radiation through the desired angle is achieved using a thin layer of material, the identification system itself is thin, lightweight and easy to use, handle and install. Despite its reduced thickness, the identification system of the invention has the same or better performance than prior art systems and, moreover, tends to be robust and less susceptible to physical damage. Another benefit of the invention is the ease with which the sheet of thermally reflective material can be cut to size or otherwise tailored for use in an identification device.

Importantly, in contrast to prior art systems, the invention can be configured for use on smaller structures, vehicles and even personnel.

In one preferred embodiment, the identification system simply consists of a sheet of thermally reflective material according to the first aspect of the invention, preferably adapted such that it can be mounted and/or fixed on a surface. Suitable mounting and/or fixing means include frames, adhesives and fasteners. Many other fixing options will occur to the skilled person. Optionally, the sheet of thermally reflective material comprises one or more regions adapted to bear suitable fasteners.

Generally, the preferred features of the one of more sheets of material of the second aspect are as discussed above in relation to the first aspect.

Simple optics dictate that, when viewed from the same altitude, a thermally reflecting surface oriented at 45° to the vertical will reflect the sky directly overhead to a ground-based observer and give the lowest apparent temperature. However, a textured surface comprising a plurality of reflecting facets inclined at 45° to the vertical can lead to overshadowing effects; that is, only the uppermost surface will reflect the 'cold sky', leading to a much reduced efficiency. In general, it is preferred that the angle θ is less than or equal to 45°, preferably between 5° and 40°, more preferably between 10° and 30°, even more preferably between 15° and 25° and most preferably about 20°, but the precise angle chosen depends on the particular shape of the reflecting elements and texture and the precise angle of the surface onto which the material is to be mounted and the direction from which it is to be viewed. In the preferred embodiment of the sheet material described above, wherein the reflecting elements take the form of ridges across the material having a triangular cross section, the preferred value for θ is 20° for a vertically mounted system.

Another important benefit of the identification system of the invention is the ease with which optional identification markings can be affixed. Suitable markings include graphics, patterns, alphanumeric characters etc. and the markings can be coated or painted onto the thermally reflective material, or otherwise adhered thereto. Preferably, the thermally reflective material is overlaid with self-adhesive film identification markings, more preferably detachable markings which can be readily replaced if necessary. By using overlays, paint and so on with high thermal emissivity, it is possible to provide markings having high contrast with the apparently thermally cold background material when viewed through a thermal imager. Advantageously, overlays comprise visible and/or near-infrared retro-reflecting film, both of which have high thermal infrared emissivity and accordingly, show up well in thermal imagers whilst still being visible in the visible and/or near-infrared.

Although combinations of letters, symbols and numbers are an intuitive marking system, it is possible to confuse various combinations of characters when using relatively poor spatial resolution thermal imagers, or at longer ranges (for example, '5' and 'S' may be confused). To overcome this problem, the identification system preferably makes uses of 2-dimensional 'barcode' type markings, possibly comprising two or more square or rectangular patches of thermally reflective material according to the invention.

Optionally, the material of the invention can be positioned on, or in close proximity to, a surface selected to have high thermal emissivity, so as further to provide contrast effects.

Advantageously, it has been found that the identification system has some tolerance to rotation in the vertical or near-vertical plane. For optimum efficiency, it is preferable that the thermally reflective material is oriented such that the first facets are substantially horizontally aligned (that is, the surfaces point more or less overhead) but optionally the material can be aligned within +/- 20°, +/- 45° or even within +/- 90° from the horizontal.

According to a third aspect of the invention, there is provided an identification system suitable for use on a vehicle, said system comprising a thermally reflective sheet, tape or appliqué having a micro-structured surface texture comprising a plurality of reflecting elements, wherein each element has a first facet which is substantially reflective at thermal infrared wavelengths and wherein the respective first facets form an angle θ with the plane of the sheet, (0° < θ < 90°), and means for fixing said sheet, tape or appliqué to a vertical or near-vertical surface of said vehicle.

According to a fourth aspect of the invention, there is provided the use of a material or sheet as hereinbefore described for identification, or as an identification marker and/or identification system, preferably as an identification marker and/or identification system based on 'cold sky reflection'.

According to a fifth aspect of the invention, there is provided a method of identifying an object comprising the steps of:
(i) providing one or more sheets of thermally reflective material according to the first aspect;
(ii) orienting said sheet of material on an object to reflect thermal radiation from a desired source; and
(i) monitoring the thermal radiation reflected from the sheet of material.

Preferably, the desired source is the thermally 'cold' region of the sky, preferably within 80° of Normal to the mean surface of the earth, more preferably within 60° from Normal to the mean surface of the earth, more preferably still within 50° of Normal to the mean surface of the earth. Other preferred features are as discussed above in relation to the preceding aspects.

Any feature disclosed in respect of one aspect of the invention may be applied to any other aspects of the invention, in any appropriate combination. In particular, material aspects may be applied to system, method and/or use aspects, and *vice versa.*

The invention extends to a material, system, method and use substantially as herein described with reference to the accompanying drawings.

The invention will now be described with reference to the accompanying drawings in which;
Figure 1 is a schematic sideways elevational view of a material according to a first embodiment of the invention;
Figure 2 is a schematic cross-sectional view through the material of Figure 1;
Figure 3 is an expanded schematic cross-sectional view of a reflecting element of Figure 2;
Figure 4 is a schematic sideways elevational view of a material according to a second embodiment of the invention;
Figure 5 is a schematic cross-sectional view through the material of Figure 4;
Figure 6 is a schematic illustration of the identification device of the invention in use;
Figure 7 shows a thermal (8-12 micron) image of a vehicle bearing thermally reflective panels according to a first embodiment of the invention;
Figure 8 shows thermal (8-12 micron) images of subjects marked with material according to a first embodiment of the invention;
Figures 9a and 9b respectively show visible and thermal (8-12 micron) images of sheet material according to a second embodiment of the invention overlaid with high emissivity graphics; and
Figures 10a and 10b respectively show thermal (8-12 micron) and visible images of coloured sheet material according to a second embodiment of the invention positioned on personnel equipment.

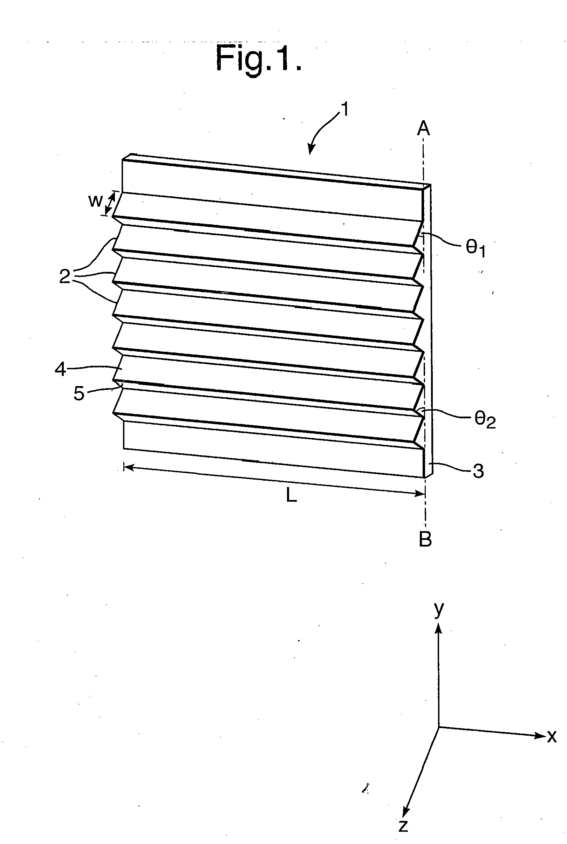

Figure 1 illustrates a preferred embodiment of the invention in which a sheet of thermally reflective material **1** has a surface texture comprising a plurality of reflecting elements **2** in the form of ridges positioned on a substrate **3.** The ridges have a triangular cross-section, thereby forming a sawtooth surface texture. Each reflecting element has a major facet **4** forming an angle **θ₁** with the plane of the sheet **(A-B)** which facet is substantially reflective at thermal infrared wavelengths. A second, minor facet **5** forms an angle **θ₂** with the substrate and is preferably (but not necessarily) aligned substantially perpendicular to the major facet (in other words, the cross-section of the reflecting element is preferably a right-angle or near right-angle triangle). It is preferred that minor facet **5** is not reflective at thermal wavelengths, so as to prevent interfering optical effects. The reflecting elements are aligned in parallel and preferably abut one another so as to maximise thermal reflection per unit of surface area. In Figure 1, major facet angle **θ₁** is substantially the same for each element.

The major facets have a size **w** x **d** x **L,** where **L** is the length of the facet, **w** is the width of the facet and **d** is the perpendicular height of the facet (or texture depth). In practice, the facet width **w** is determined by the required depth of texture, **d,** and the first facet angle **θ₁,** and **L** is simply chosen in combination with the number of major facets to give the required thermal infrared reflection area.

In Figure 1, reflecting elements **2** are formed from the same material as substrate **3.** If the substrate material is not capable of reflecting thermal radiation (as would generally be the case, for example, for polymers) major facet **4** additionally comprises a layer of thermally reflecting material, such as, for example, a layer of metal, a multilayer dielectric reflector, or thermally - reflective paint (not illustrated). If the substrate comprises a material which is capable of reflecting thermal radiation (such as, for example, a metal or metal alloy) an additional reflective layer is merely optional.

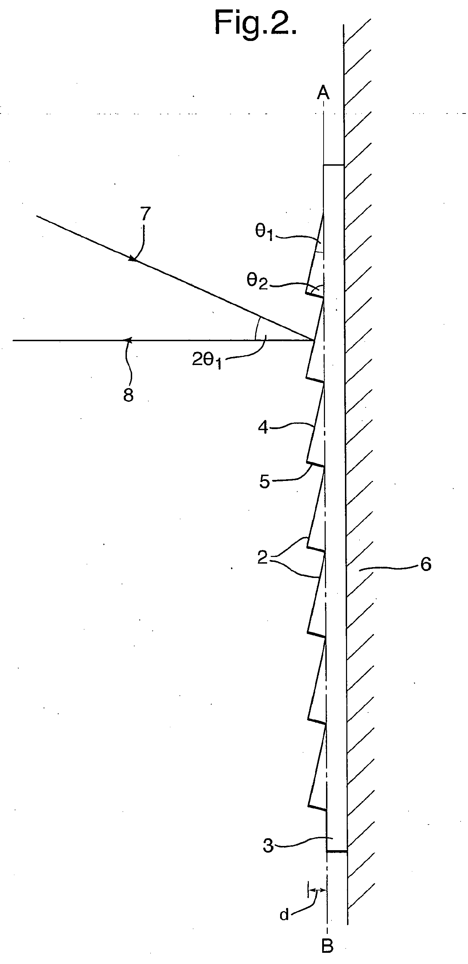

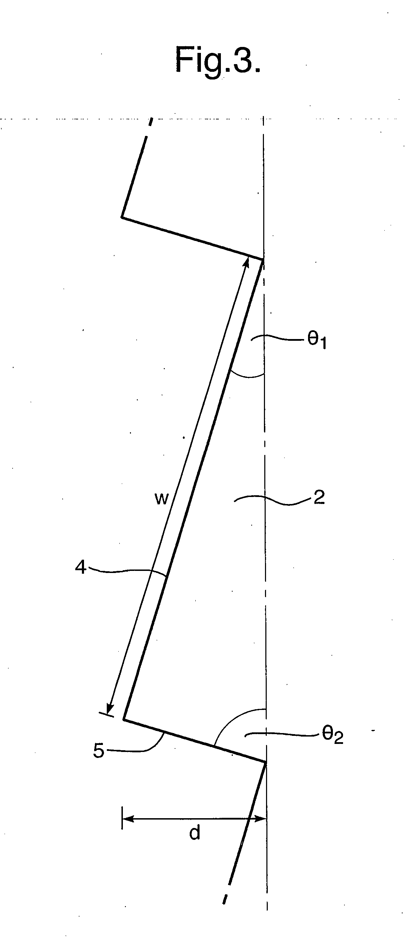

Figure 2 is a sideways, cross-sectional view of the sawtooth material of Figure 1 mounted on a vertical surface **6.** In use, thermal radiation from the sky following path **7** impinges on major facets **4** of reflecting elements **2** and is reflected through angle 2**θ₁** with respect to path **7** along path **8** to a ground-based thermal imager. Figure 3 is an enlarged version of Figure 2 showing a single reflecting element **2.**

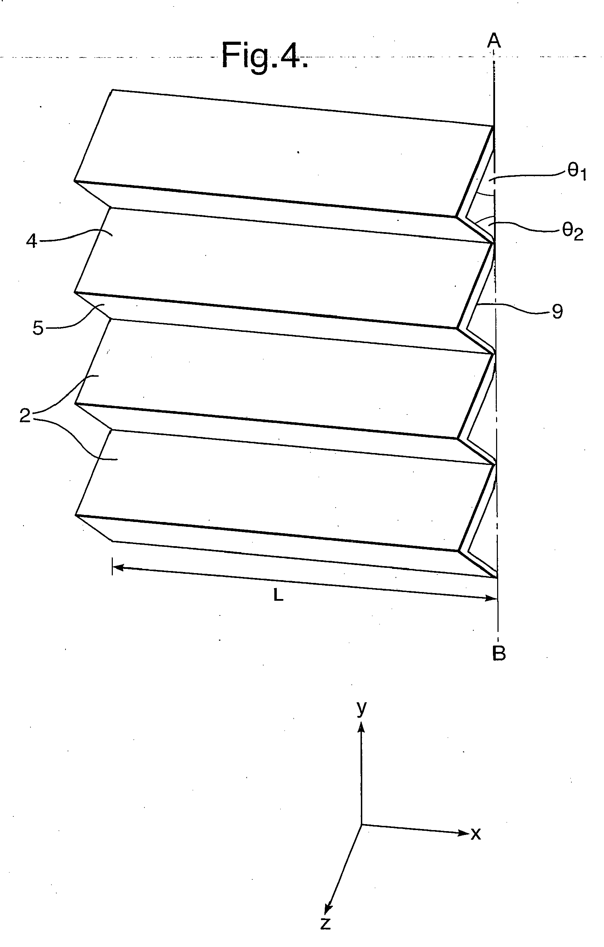

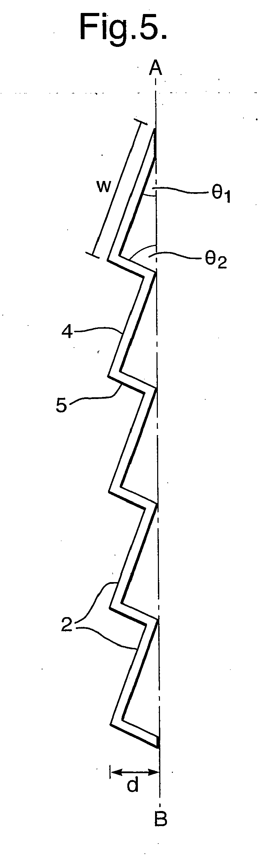

Figures 4 and 5 illustrate another preferred embodiment of the invention in which a sheet of substrate material **9** is formed into a corrugated sheet of thermally reflective material. Corrugated sheet **9** again has a surface texture comprising a plurality of reflecting elements **2,** this time in the form of folded ridges in substrate **9.** The ridges have a triangular cross-section, thereby forming the aforementioned sawtooth surface texture. Again, each reflecting element has a major facet **4** forming an angle **θ₁** with the plane of the sheet (**A-B**) which facet is substantially reflective at thermal infrared wavelengths. A second, minor facet **5** forms an angle **θ₂** with the substrate and is preferably aligned substantially perpendicular to the major facet, although an angle of 90° +/- 5° is acceptable. The substrate material **9** may comprise a thermally reflective material, such as a metal, or may comprise a non-thermally reflective material. In the latter case, thermally reflecting facet **4** additionally comprises a layer of thermally reflective material.

In the second embodiment, the thickness of the material is the thickness of the texture depth, **d.** If required, the corrugated reflective material or foil can be adhered or otherwise fixed to a substantially planar mounting sheet or surface.

It should be noted that Figures 2 to 5 show fewer than ten reflecting elements for ease of illustration only. In practice, the surface texture of the material is likely to comprise many more reflecting elements. The number of reflecting elements per unit area of textured surface depends upon a number of factors, for example the depth of the texture and the facet angle θ. Typically, a thin-film material or foil having a sawtooth configuration comprises more than 100 reflecting elements/m, preferably more than more than 500 reflecting elements/m and even more preferably more than 1000 reflecting elements/m.

In each of the preferred embodiments, the major facet angle **θ₁** is selected such that, when the material is applied to a vertical or near-vertical surface and viewed from approximately the same altitude as the surface, the material reflects cold regions of the sky. Because the temperature of the sky generally decreases with increasing elevation (where the elevation is the angle above the horizon) it is desirable to increase the major facet angle. However, it has been found that, as the major facet angle increases, more of the sky is obscured by the minor facet directly above it and accordingly, the region where the facets meet falls into shadow and the device becomes increasingly ineffective. Thus, the selection of major facet angle becomes a trade-off between angle-dependent fractional shadowing and elevation-dependent average sky temperatures. By way of example, it has been found that, for a 10°-90°-80° design (that is, major facet angle **θ₁** = 10°, minor facet angle **θ₂** = 80° and the angle between the major and minor facet = 90°) positioned vertically, 93% of the major facet will reflect the sky at an elevation of 20°. For a 20°-90°-70° design, on the other hand, this changes to 88% of the major facet reflecting the sky at an elevation of 40° where it is typically colder than at an elevation of 20°, and for a 30°-90°-60° design, only 65% of the major facet will reflect the sky, albeit at an even higher elevation of 60° where the average observed sky temperature is lower than at an elevation of 40°. If the minor facet is also reflective, the remaining area of the major facet will retro-reflect the scene from a direction close to that from which the viewing imager is operating; such retro-reflection is generally undesirable.

Preferably, the major facet angle **θ₁** lies in the range 10 to 30°, more preferably in the range 15 to 25° and is most preferably about 20°.

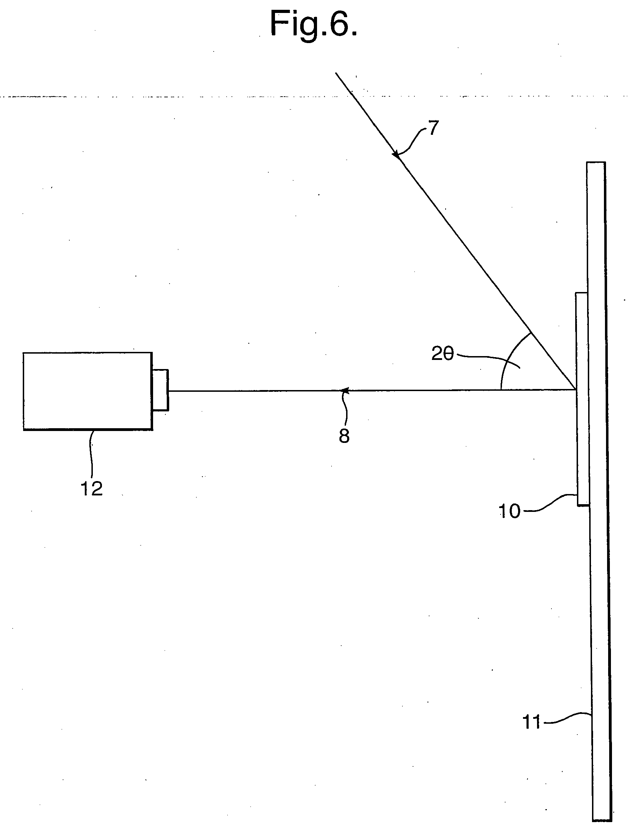

Figure 6 shows an identification system according to the invention in use. An identification device **10** comprising a sheet of thermally reflective material having a surface texture comprising a plurality of aligned thermally reflecting facets inclined at the same facet angle **θ** is positioned on a vertical surface **11,** and an imaging system **12** is positioned at the same elevation. Thermal radiation from the sky following path **7** is reflected through angle **2θ** along path **8** to the thermal imager. The device appears in the imaging system as a 'cold' spot on the 'warmer' vertical surface.

Material according to the invention has been shown to mark a variety of vertical or near-vertical surfaces on objects when viewed in the thermal infrared, as illustrated by the following Examples.

### Imaging Equipment.

An Agema 900 imaging radiometer was used having two camera heads, one operating over the 3-5 micron wavelength band and the other operating over 8-12 micron. The camera heads were fitted with 2.5° x 5° lenses and the sensing array on the camera head was comprised of 136 pixels high by 272 pixels wide; this instrument is referred to as the Agema imager. Alternatively, a FLIR, imaging radiometer operating in the 8-12 micron waveband was used, fitted with a 10° x 20° lens and a 240 pixels high x 320 pixels wide sensing array; this instrument is referred to as the FLIR imager. In the thermal infrared images show in the Examples, lighter shades of grey are warmer parts of the image and darker shades of grey are colder; this is referred to as a 'white is hot' greyscale image.

### Example 1

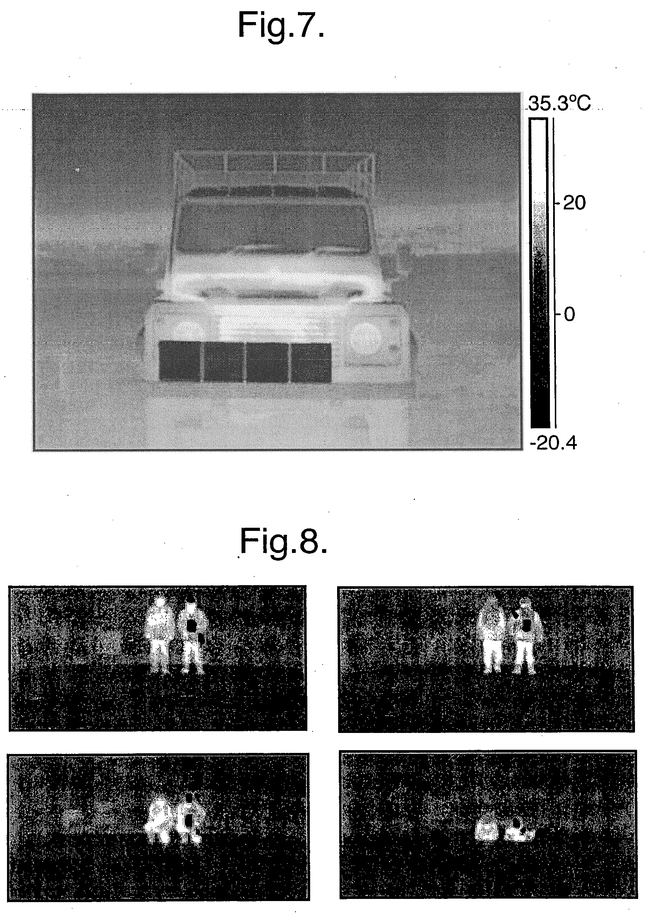

Four sheets of thermally reflective material were machined from stainless steel, each sheet having a 20°-90°-70° sawtooth texture according to the preferred embodiment illustrated in Figures 1 and 2 over an area of 200 mm x 200 mm. Although the major facet angle θ₁ was 20° for each panel, the depth of the texture, **d,** and accordingly, the width, **w**, of the facets, was different in each case; the depths used were 2 mm, 1 mm, 0.5 mm and 0.2 mm. Panels were constructed from the thermally reflective material by cutting the sheet material to size and the panels were mounted vertically on the front of a vehicle. Figure 7 shows a night-time 8-12 micron thermal infrared image of the vehicle taken using the FLIR imager, demonstrating that the panels worked effectively, that is, intense 'apparently cold' areas are visible on the vehicle. There was negligible variation in reflection efficiency between the different facet sizes.

### Example 2

A flexible directional reflector material was manufactured by the following method, said material having reflecting elements taking the form of parallel, equal-sized ridges with a triangular cross section (that is, the preferred sawtooth embodiment illustrated in Figures 1 and 2). A mould was machined from a titanium block with a repeated pattern of 20°-90°-70° prisms (that is, major facet angle 20° and minor facet angle 70°) with minor facet width 1.06 mm and major facet width, **w**, 2.92 mm (triangle base length 3.1 mm). The mould surface was replicated by using a filled poly vinyl chloride (PVC) moulding material to form the working mould. Onto the internal surface of the PVC mould, a thin layer of silver was deposited by silver nitrate reduction to form a sacrificial layer to ease removal of the final material from the mould and onto which subsequent layers could be electrodeposited. Onto the silver layer, a 1 micron layer of gold was electroplated and a 100 micron layer of copper was subsequently electroformed. A 2 mm thick layer of a flexible epoxy resin mixture was then poured onto the copper surface and cured. Upon removal from the mould, the silver layer was retained since the thermal infrared reflectivity of the material was found to be high; however, the silver could, if required, have been removed by nitric acid etching, leaving a gold surface layer. The flexible epoxy/Cu/Au/Ag composite material was cut into a number of patches, hook-and-loop fixing material was attached to the back and the patches of material were used to mark personnel.

The flexible material was used to mark the helmet, chest and jacket pocket of a subject and the markings were found to be clearly visible in the thermal infrared under a wide range of climatic conditions from clear night sky to overcast with light rain and sleet, lighting conditions from daylight to night time, ranges from 5 meters to over 300 meters, personnel positions including standing, kneeling and lying prone. By way of example, Figure 8 shows 8-12 micron thermal images taken using the Agema imager of an unmarked subject and a marked subject in a range of poses. The flexible marking material is visible as dark patches on the helmet front, chest, jacket pocket, back pack and shoulder. Similar images were obtained using a FLIR imager working in the 8-12 micron band.

### Example 3

The material of the invention can be 'overwritten' using conventional, self-adhesive vehicle sign-writing vinyl to create readable text, graphics or markings in both the visible or thermal infrared.

A sheet of thin-foil material having a micro-structured, thermally reflective texture was prepared by electro-forming nickel onto a fluorinated polyurethane former having a sawtooth texture according to the preferred embodiment illustrated in Figures 4 and 5. The major facet angle **θ₁** was 10°, and the major facet width, **w**, was 0.86 mm. The minor facet angle **θ₂** was 80° and the minor facet width was 0.15 mm. Once the nickel had been grown to a thickness of 100 micron, it was peeled from the pattern former and then electroplated on the working surface with 1 micron of gold. The gold-coated nickel foil was stuck to an aluminium substrate plate (800 x 400 mm) using a contact adhesive and the thermally reflective material was then overlaid with the letters 'C', 'l' and 'D' cut from self-adhesive coloured PVC film used for automotive sign writing. The letters 'CID' were affixed simply by sticking them to the surface of the material with light pressure.

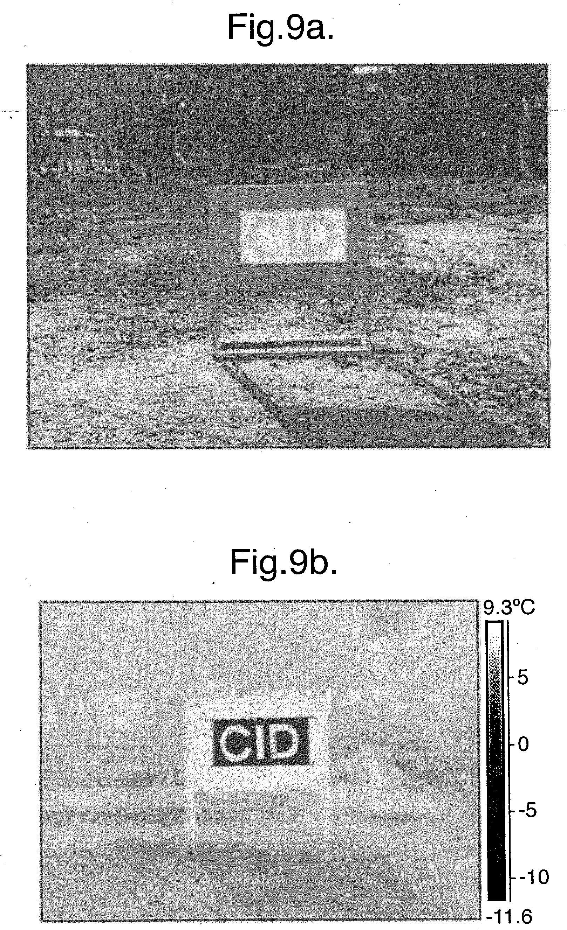

Figures 9a and 9b respectively show a visible image and an 8-12 micron thermal image taken in daylight using the FLIR imager of the thermally reflective panel comprising overlays. It can be seen that, in the thermal infrared, the vinyl film letters appear in strong positive contrast with the cold (black) background. The fine texture of the thermally reflective material of the invention allowed the letters to be stuck to the surface readily.

### Example 4

As discussed above, the material of the invention can be formed by evaporating a layer of a thermal infrared reflective material onto a non-thermal infrared reflective material such as a polymer. This composite material can further be coloured through the subsequent application of a coating of a thermal infrared transparent colouring material, optionally containing a matting agent.

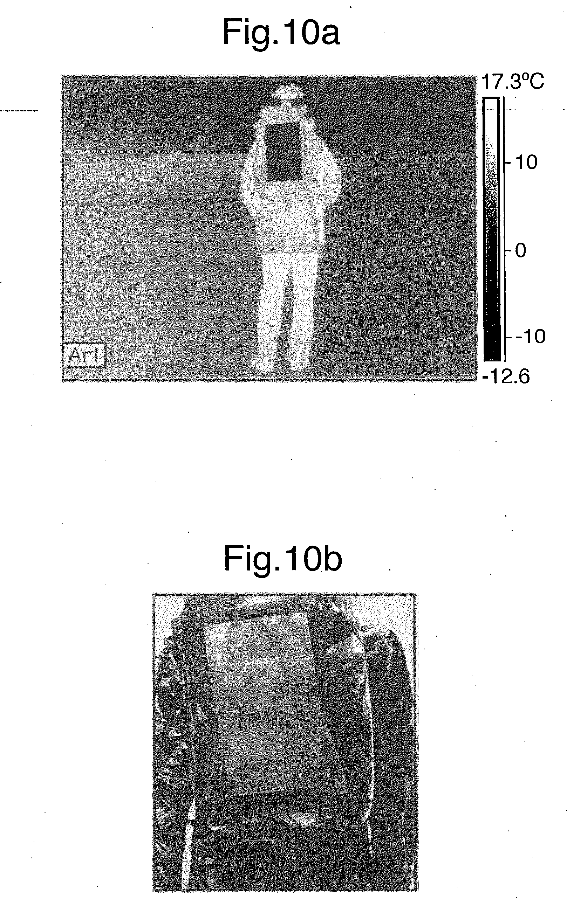

A 0.3 mm thick, 200 mm wide, 25 m long reel of polymer film was formed in a thermoplastic polyurethane through a hot embossing process. In the hot embossing process, a corrugated, micro-structured texture was imparted to the surface by passing the film, under pressure, between a rotating heated mandrel with a 12°-90°-78° sawtooth texture machined intro the surface and a smooth pinch roller. The surface formed had a major facet angle **θ₁** of 12°, major facet width, **w**, of 0.601 mm, minor facet angle **θ₂** of 78° and minor facet width of 0.128 mm running along the length of the roll. The surface of the roll of material was sputter-coated with a 100 nm layer of a silver (0.95) gold (0.5) mixture. The metallised surface was subsequently spray coated with a 10 micron thick layer of a matt green thermal infrared transparent material. The composite material was then cut into a number of shapes and sizes and attached to a helmet and backpack using hook and loop fasteners. Figure 10a shows an 8-12 micron thermal image of these materials taken using the FLIR imager. Figure 10b shows a grey-scale visible image of the coloured, metallised flexible polymer material on a backpack; the desirable matt appearance of the surface texture can be clearly seen.

The material and identification device of the invention can be used for a number of different identification applications and applied to a number of different objects. For example, the material, or an identification device comprising said material, might be applied to clothing (such as, for example, helmets, jackets and trousers), armour and/or man-portable equipment (such as, for example, backpacks) so as to mark personnel. Alternatively, the material might be applied to temporary or semi-permanent structures such as tents, signposts, barriers and the like. The invention can also be applied to vehicles and buildings.

More generally; the invention can be used to redirect thermal radiant energy, such as might be desirable in energy conservation applications.

## Claims

1. A sheet of thermally reflective material having a surface texture comprising a plurality of reflecting elements, wherein each element has a first facet which is substantially reflective at thermal infrared wavelengths and wherein the respective first facets form an angle θ with the plane of the sheet (0° < θ < 90°).

2. Material according to claim 1, wherein the first facets are aligned such that, in use, thermal radiation is reflected from a common direction.

3. Material according to claim 1 or claim 2, wherein the first facets form substantially the same angle θ.

4. Material according to claim 3, wherein θ is less than or equal to 45°, preferably between 5° and 40°, more preferably between 10° and 30°, even more preferably between 15° and 25° and most preferably about 20°.

5. Material according to any one of claims 1 to 4, wherein the first facets lie in substantially the same plane.

6. Material according to claim 1 or claim 2, wherein the first facets take a range of angles such that, when applied to a curved surface, the facets lie in substantially the same plane.

7. Material according to any preceding claim, wherein the surface texture takes the form of a micro-structure, preferably a uniform micro-structure having a repeating pattern of reflecting elements.

8. Material according to any preceding claim, wherein the reflecting elements have a triangular cross-section.

9. Material according to any preceding claim, wherein the surface texture comprises a sawtooth texture.

10. Material according to any preceding claim, wherein the material takes the form of a substrate having said surface texture positioned thereon.

11. Material according to claim 10, wherein the substrate and surface texture are formed from the same material.

12. Material according to any one of claims 1 to 9, wherein the material takes the form of a corrugated sheet.

13. Material according to any preceding claim, wherein the first facets comprise a material having a low thermal infrared emissivity, preferably a thermal emissivity less than or equal to 0.5, more preferably less than or equal to 0.3, even more preferably less than or equal to 0.1 and most preferably less than or equal to 0.05.

14. Material according to any preceding claim, wherein the first facets are highly reflective in the thermal infrared.

15. Material according to claim 14, wherein the first facets are specular reflectors at infrared wavelengths.

16. Material according to any preceding claim, wherein the first facets comprise an additional layer of a high reflectivity, low emissivity material.

17. Material according to claim 16, wherein the material is a metal selected form the group consisting of gold, platinum, palladium silver, copper, titanium, chromium, nickel and aluminium, or any combination thereof.

18. Material according to any preceding claim, wherein the depth of the surface texture is 5 mm or less, more preferably 2 mm or less, still more preferably 1 mm or less and even more preferably 0.5 mm or less.

19. Material according to claim 18, wherein the depth of the surface texture lies in the range 0.01 mm to 0.5 mm, preferably 0.05 mm to 0.2 mm.

20. Material according to any preceding claim, wherein said material comprises an additional coloured, thermally transparent layer, applied to all or part of the surface texture.

21. Material according to any preceding claim, wherein said material takes the form of a flexible sheet.

22. An identification device comprising one or more sheets of thermally reflective material according to any one of claims 1 to 21.

23. An identification device according to claim 22, wherein the one or more sheets of reflective material are positioned such that, in use, thermal radiation from the sky is reflected from the respective first facets towards the observing thermal imager.

24. An identification device according to claim 22 or claim 23, wherein the sheet of thermally reflective material is substantially vertical.

25. An identification device according to any one of claims 22 to 24, wherein the value of θ is selected such that, in use, thermal radiation is reflected from the sky.

26. An identification device according to any one of claims 22 to 25, wherein the one or more thermally reflecting sheets form a recognisable pattern or shape, optionally a 2-dimensional barcode pattern.

27. An identification device according to any one of claims 22 to 26, wherein the one or more thermally reflecting sheets are overlaid with low reflectivity material to create an identification mark or symbol.

28. The use of a material according to any one of claims 1 to 21, or a device according to any one of claims 22 to 27, as an identification marker.

29. The use of a material according to any one of claims 1 to 21, or a device according to any one of claims 22 to 27, to redirect thermal infrared energy.

30. A method of identifying an object comprising the steps of:
(iii) providing one or more sheets of thermally reflective material according to claim 1 to 21;
(iv) orienting said sheet of material on an object to reflect thermal radiation from a desired source; and
(v) monitoring the thermal radiation reflected from the sheet of material.

31. A method according to claim 30, wherein the desired source is a thermally cold region of the sky.

32. A method according to claim 30 or 31, wherein the one or more sheets of thermally reflective material are oriented vertically.

33. Clothing, armour or portable equipment comprising one or more sheets of thermally reflective material according to any one of claims 1 to 21.

34. A temporary or semi-permanent structure comprising one or more sheets of thermally reflective material according to any one of claim 1 to 21.

35. A vehicle identification system comprising one or more sheets of thermally reflective material according to any one of claim 1 to 21.

36. Any method, use, device or material substantially as herein described.
